# EUROPEAN PATENT SPECIFICATION

(11) **EP 3 550 221 B1**
(45) Date of publication and mention of the grant of the patent: **10.05.2023**
(21) Application number: 16923127.1
(22) Date of filing: 02.12.2016
(51) Int. Cl.: F03G 6/06, F24S 20/20, F24S 23/30, F24S 23/77, F24S 30/20, F24S 30/422, F24S 30/452, F24S 40/20, F24S 50/20, F24S 60/00, H02S 20/00, H02S 20/32, H02S 40/22, F24S 30/00, F24S 23/00

(54) **SOLAR POWER STATION**
SOLARKRAFTWERK
CENTRALE SOLAIRE

(43) Date of publication of application: 09.10.2019
(73) Proprietor: Bolymedia Holdings Co. Ltd., Santa Clara, California 95051 (US)
(72) Inventor: HU, Xiaoping, Shenzhen, Guangdong 518109 (CN)
(74) Representative: Manitz Finsterwald Patent- und Rechtsanwaltspartnerschaft mbB
(86) International application number: PCT/CN2016/108341
(87) International publication number: WO 2018/098800

(56) References cited:
- WO-A1-2016/082097
- WO-A1-2016/090570
- CN-A- 101 551 164
- CN-A- 102 466 329
- CN-A- 102 667 361
- KR-A- 20010 044 463
- KR-B1- 100 749 504
- US-A- 4 074 704
- US-A- 4 266 530
- US-A1- 2013 047 977
- DATABASE WPI Section PQ, Week 201423 Thomson Scientific, London, GB; Class Q74, AN 2014-E89829 XP002798919, -& JP 2014 052171 A (RICOH KK) 20 March 2014 (2014-03-20)
- DATABASE WPI Section PQ, Week 200837 Thomson Scientific, London, GB; Class Q74, AN 2008-F75298 XP002798918, -& KR 100 749 504 B1 (LEE S G) 14 August 2007 (2007-08-14)

## Description

### Technical Field

The present disclosure relates to clean energy, and in particular to solar power stations. Related technologies are known from US 4 266 530 A and JP 2014 052171 A.

### Background of the Invention

In order to increase the efficiency of utilizing solar energy and reduce the area of a device that receives or collects solar energy, a sun-tracking solar system (also known as sun-tracking system) is often employed. The sun-tracking system is primarily used to adjust the orientation and attitude of a light-receiving surface in the systems as the direction of the sun changes, so that sunlight is received as much as possible when the area of the surface is limited.

Whether it is a distributed photovoltaic power plant or a solar-thermal central-receiver power plant, the sun-tracking system currently adopted is usually a distributed one; that is, each relatively independent light-receiving surface in the system is provided with an independent sun-tracking assembly, each sun-tracking assembly generally comprising a rotating shaft and a support platform.

The distributed sun-tracking system may allow all the light-receiving surfaces in the system to perform sun-tracking movements, but it also results in a significant increase in installation, adjustment, operation and maintenance costs. Moreover, a certain amount of space needs to be reserved between multiple sun-tracking assemblies, making it practically difficult to reduce the requirement for the surface area of the ground.

### Summary of the Invention

The present invention is defined in the independent claims. A solar power station according to the present disclosure includes a first light-receiving element having a first working surface that is substantially lying flat, a second light-receiving element having a second working surface substantially perpendicular to the first working surface, and a first driving mechanism. The first and the second working surfaces are configured so that sunlight irradiates onto the first working surface after passing through the second working surface. The second light-receiving element is fixed on the first driving mechanism. The first driving mechanism is configured for driving the second working surface to move or rotate relative to the first working surface according to the movement of the sun.

Specific examples according to the present disclosure will be described in detail below with reference to the accompanying drawings.

### Brief Description of the Drawings

FIG. 1 is a schematic view of a solar power station according to a first example not being a part of the present invention;
FIG. 2 is a schematic view of a solar power station according to a second example not being a part of the present invention;
FIG. 3 is a schematic view of a solar power station according to a first embodiment;
FIG. 4 is a schematic view of a solar power station according to a second embodiment;
FIG. 5 is a schematic view of a solar power station according to a third example not being a part of the present invention; and
FIG. 6 is a schematic view of a solar power station according to a fourth example not being a part of the present invention.

### Detailed Description

### First Example

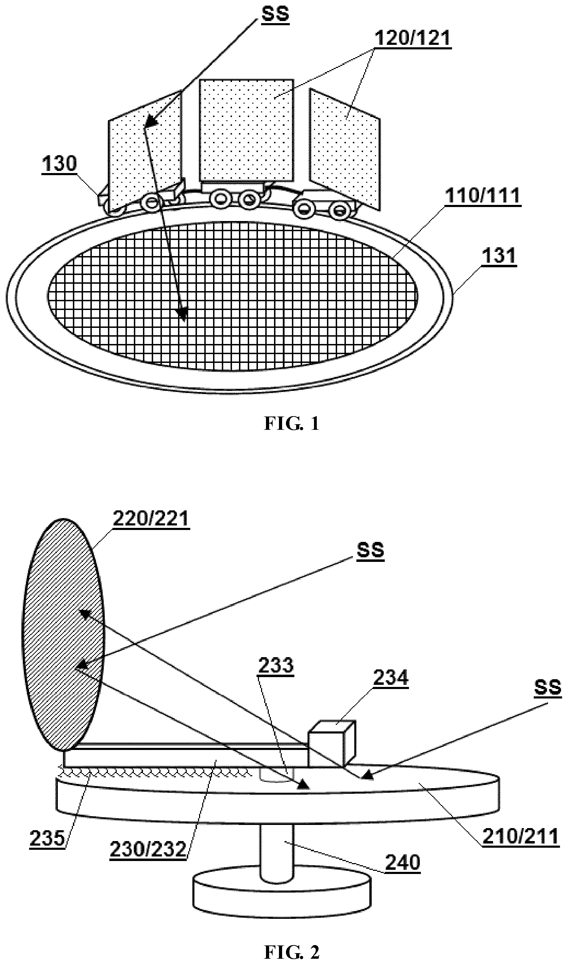

Referring to FIG. 1, a solar power station according to an example of the present disclosure may include a first light-receiving element 110, a second light-receiving element 120 and a first driving mechanism 130.

The first light-receiving element 110 has a first working surface 111 that is substantially lying flat.

The second light-receiving element 120 has a set of second working surfaces 121 that are arranged substantially vertically with respect to the first working surface.

The terms "lying flat" and "vertical" as used in the present disclosure are relative ones. When the angle between the normal of the working surface and the direction of gravity of a location where the working surface sits is less than 30 degrees, it can be regarded as "substantially lying flat"; while the normal of the working surface and the direction of gravity of the location are greater than 60 degrees, it can be regarded as "substantially vertical".

The working surface referred to in the present disclosure may be one used for realizing solar energy utilization or solar energy collection or a mixture thereof. Therefore, the first and second light-receiving elements may be selected from a group consisting of a solar energy utilizing device and a light-guiding element. The working surface can be a single plane or a curved surface, or a screen-type folding surface with adjacent folding sides capable of being moved relatively to one another.

The solar energy utilizing device as mentioned herein generally refers to various elements that convert solar energy into other energy, such as photovoltaic panels, solar-thermal conversion devices, and the like. The photovoltaic panel as mentioned herein refers to all solar photoelectric conversion devices that directly convert solar energy into electrical energy, such as various semiconductor photovoltaic panels, photovoltaic thin films, quantum dot photovoltaic panels, and the like.

The light-guiding element as mentioned herein can be selected to be transmissive or reflective depending on the needs of optical path design. The reflective light-guiding element includes a reflector, a reflective lens and the like. Preferably, a Fresnel lens may be employed in a transmissive lens and the lens portion of a reflective lens. A detailed description of the Fresnel lens can be found in a PCT application No. WO/2016/082097 entitled "Fresnel Lens System", published on June 2, 2016.

It is worth mentioning that the lens (including the lens portion in the reflective lens) referred to in the present disclosure may be a spot-focusing (or spot-diverging) lens whose focus falls on one point, or a line-focus (line-diverging) lens whose focus is in a straight line; hereinafter the latter one is referred to as a "linear" lens. When the vertical second light-receiving element is selected as the light-guiding element, it may be preferably to use a reflective Fresnel lens, particularly an astigmatic reflective Fresnel lens and a reflective linear Fresnel lens, more preferably an astigmatic reflective linear Fresnel lens. The "astigmatic" reflector (or reflective lens) as mentioned herein refers to a reflector (or reflective lens) that has a reflection angle larger than incident angle. The use of an astigmatic reflective Fresnel lens helps to increase the height of the vertical working surface to receive more solar energy while the size of the planar working surface is constant.

In this example, the first working surface is a plane formed by a photovoltaic panel and laid flat on the ground (or on a bracket parallel to the ground). The second working surface is a screen-type folding surface formed by a reflector and arranged substantially vertically next to the first working surface. Since the second working surface is a reflecting surface, the sunlight SS (which is used in the subsequent examples and embodiments and will not be described again) is irradiated onto the first working surface after being reflected by the second working surface. It is easy to understand that in other examples and embodiments, the functions of the first working surface and the second working surface may also be exchanged. For example, when the first working surface is used to collect solar energy and the second working surface is used for solar energy utilization, by means of adjusting the relative positions of the first working surface, the second working surface and the sun accordingly, the sunlight is irradiated onto the second working surface (which is vertical) after passing through the first working surface (which is lying flat). It is worth mentioning that when one of the first working surface and the second working surface is a mirror surface, the area of the mirror surface only needs to match the area of the other working surface (which is not a mirror surface) opposite thereto, and it is not necessary to be too big. The term "match" refers to the light reflected by the mirror surface, just covering the other working surface opposite thereto. When the areas of the two working surfaces match, a best ratio of performance to price may be achieved.

The first drive mechanism 130 may include a multi-section railcar that is movable along a rail 131 that surrounds the first light-receiving element. Each mirror surface of the second light-receiving element is respectively fixed on each section of the multi-section railcar to realize sun tracking by orbital motion. Specifically, the proper position of the railcar on the rail can be calculated according to the position of the sun, so as to irradiate most of the sunlight by reflection to the flat solar energy utilization device that is lying flat.

The rail used by the railcar can be either a single track or a double track. In other examples and embodiments, the first driving mechanism may also employ a wheeled machine or other devices as long as the second working surface can be moved or rotated relative to the first working surface according to the movement of the sun. The trajectory of the first driving mechanism may be a curved trajectory around the light-receiving element that is lying flat, such as a circular curve or an elliptical curve or a three-dimensional curve; or it may be a linear reciprocating motion trace along the extending direction of the first working surface. Since the operation of sun tracking is primarily done by the first driving mechanism, the calculation of sun tracking by the power station according to the present disclosure can be effectively simplified. For example, in accordance with the position of the sun, a position at which a most solar energy may be received can be selected from a possible trajectory of the vertical light-receiving element, or a position at which a most sunlight may be reflected to the light-receiving element that is lying flat from a possible trajectory of the vertical light-receiving element.

In this example, the screen-type mirror surface of the second light-receiving element is directly vertically fixed on the railcar, and is moved along a rail together with the railcar. In other examples and embodiments, the second light-receiving element may also be fixed to the first driving mechanism by a rotating shaft, thereby also producing rotation.

In this example, the solar energy utilizing device (e.g. photovoltaic panel) that is lying flat may be employed alone. In other examples and embodiments, the solar energy utilizing device that is lying flat may also be used in cascade with other energy utilizing devices. For example, a photovoltaic panel can be cascaded with a thermal energy utilizing device to achieve higher solar energy utilization efficiency. The thermal energy utilizing device may be arranged on the back side of the at least one solar energy utilizing device and thermally coupled to the solar energy utilizing device. The thermal energy utilizing device as mentioned herein, which may be a thermoelectric conversion device or a thermal energy absorption device, can be further coupled to an external open or closed working fluid circuit to form a seawater desalination system, a solar-thermal utilization system with a gas turbine or a thermal energy storing device container, and the like.

In addition, other light-guiding elements, such as a transmissive concentrating Fresnel lens or a tapered mirror surface light-guiding tube, may be further arranged on the optical path between the first working surface and the second working surface, so as to enhance the concentration ratio and solar energy utilization efficiency. Alternatively, the photovoltaic panels may also be enclosed to form a closed photovoltaic and photothermal utilization system.

### Second Example

Referring to FIG. 2, a solar power station according to another example of the present disclosure may include a first light-receiving element 210, a second light-receiving element 220 and a first driving mechanism 230.

The first light-receiving element 210 has a first working surface 211 that is substantially lying flat.

The second light-receiving element 220 has a set of second working surfaces 221 that are arranged substantially vertically with respect to the first working surface.

In this example, the two light-receiving elements may be a reflector and a photovoltaic panel, or both of them are photovoltaic panels. The sunlight SS may be reflected from the vertical working surface to the other one that is lying flat, and vice versa.

The first driving mechanism 230 may have a whirling arm 232 that is arranged substantially parallel to the first working surface 211 and rotatable over the surface of the first working surface 211 about a rotating shaft 233 that is substantially perpendicular to the first working surface 211. The second light-receiving element may be fixed onto the whirling arm, for example, at one end away from the rotating shaft 233. In other examples and embodiments, the second light-receiving element may also be attached to the whirling arm via a rotating shaft so as to increase a controllable rotational degree of freedom, such as a degree of freedom of rotation about a substantially horizontal rotating shaft. In order to improve the stability of the system and reduce the requirement for driving force, a weight 234 may be arranged on the other end of the whirling arm such that the center of gravity of the entire rotating mechanism may fall on the whirling arm.

The length of the whirling arm 232 may be fixed, or the whirling arm may be telescopic such that the second light-receiving element is movable around the first light-receiving element in a circular or elliptic trajectory.

As a preferred example, the whirling arm in this example may be further provided with a cleaning apparatus 235 on a side adjacent to the first working surface for cleaning the first working surface when the whirling arm rotates over the first working surface, so that an automatic cleaning of the light-receiving surface can be carried out while realizing sun tracking. The clean apparatus may be, for example, a brush, a dedusting duct with an open facing the surface to be cleaned, or the like, as long as it can remove foreign matter (such as dust) on the light-receiving surface by the rotary motion.

Optionally, a second driving mechanism 240 configured for driving the entire power station may further be arranged in this example. The second driving mechanism may be specifically a vertical rotating column, and the first light-receiving element is fixed thereon, and correspondingly, the whirling arm 232 and the first driving mechanism 230 are also fixed thereon. Therefore, the entire power station can be moved or rotated by the second driving mechanism.

The solar power station in this example is suitable for small and medium-sized applications, for example, as a domestic or commercial solar power station.

### First Embodiment

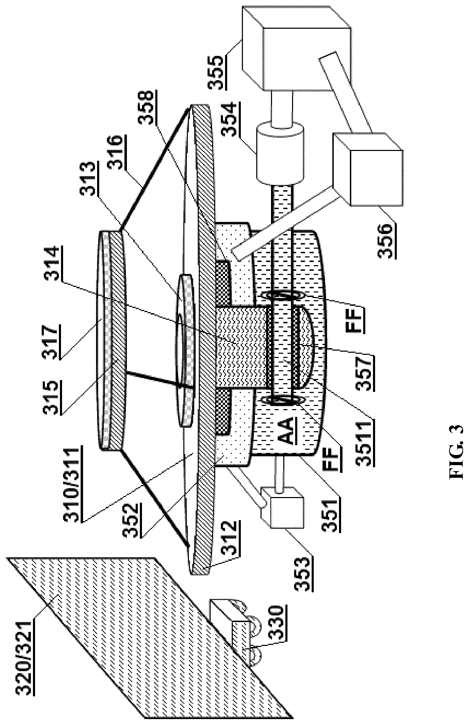

Referring to FIG. 3, a solar power station according to still another example of the present disclosure may include a first light-receiving element 310, a second light-receiving element 320 and a first driving mechanism 330.

The first light-receiving element 310 is a combination of a solar energy utilizing device and a reflective Fresnel lens. The first working surface 311 that is substantially lying flat is a mixed-type surface. The first working surface 311 is formed by two solar energy utilizing devices and a first reflective Fresnel lens 312; wherein a first photovoltaic panel 313 is surrounded the inlet of a thermal energy storing device 314, and the first reflective Fresnel lens 312 is surrounded the periphery of the photovoltaic panel 313. The first light-receiving element 310 may further include a second reflective Fresnel lens 315 arranged face to face with the first reflective Fresnel lens and fixed by a support 316. For ease of illustration, the walls of various containers in the figures herein are assumed to be transparent, which will not be described again hereinafter.

In this example, two different types of solar energy utilizing devices (a photovoltaic panel and a thermal energy storing device) are simultaneously employed to simultaneously realize photoelectric and solar-thermal utilization. The thermal energy storing device is located at the center of the focus of the solar energy, and can accommodate any working medium having a high heat capacity, such as molten salt, water, paraffin, silicone grease, etc., and the inlet of the thermal energy storing device can be made of a transparent heat insulating material. The structure in which the photovoltaic panel and the thermal energy storing device are mixed can be adapted to a sufficiently high energy density and can prevent the photovoltaic panel from being damaged by high temperature. Compared with existing single photovoltaic power plants or solar-thermal power plants, it maintains high efficiency of solar energy utilization and low initial cost. In addition, the thermal energy storing device can also store energy, which is beneficial to balance the time difference between the collection and use of solar energy.

The second light-receiving element 320 may be a reflector or a reflective Fresnel lens having a second working surface 321 that is substantially vertical. The sunlight from the sky or the second working surface is reflected and converged by the first reflective Fresnel lens 312 to the second reflective Fresnel lens 315, and then reflected and converged by the second reflective Fresnel lens to the photovoltaic panel 313 or entered into the thermal energy storing device 314.

The first driving mechanism 330 is a trackless wheeled machine for traveling back and forth in accordance with a set sun-tracking route. The second light-receiving element 320 is vertically fixed onto the trackless wheeled machine.

Preferably, the first light-receiving element 310 may further include a second photovoltaic panel 317 arranged on a side of the second reflective Fresnel lens 315 facing the sky and configured to directly receive sunlight from the sky or the second working surface for better utilizing solar energy. As to large-sized apparatus, the second reflective Fresnel lens may have a relative larger area, so it would be beneficial to provide a second photovoltaic panel.

Preferably, a thermal energy utilizing device may further be provided in this example so as to better utilize thermal energy generated or stored by the solar energy utilizing device; wherein a first container 351 is wrapped around the thermal energy storing device 314, and the working medium AA in the first container may be exchanged heat with the working medium in the thermal energy storing device. Since the temperature of the thermal energy storing device is generally high, the first container may be used as a liquid vaporizing tank, and the working medium AA therein may be selected from a group consists of water, alcohol, diethyl ether, a coolant (such as Freon or its substitute) and the like. A second container 352 is arranged on the back side of the photovoltaic panel 313 and is thermally coupled to the photovoltaic panel. The second container can be used as a preheating tank for the working medium AA. In other examples and embodiments, other types of thermal energy utilizing device may also be employed, such as Stirling thermal generator, etc..

The working medium AA, during operation, may be preheated by thermal energy generated by the photovoltaic panel 313 in the second container, and transported to the first container 351 via a first compressor 353, and then vaporized by heat exchange with the thermal energy storing device 314; the generated gas may be sent to a turbine generator 354 for power generation, and then cooled in a condensing tank 355; the cooled liquid may be sent back to the second container 352 by a second compressor 356; thus a closed working cycle is completed. Each node device in the closed working cycle through which the working medium AA may pass can be communicated by a pipeline and controlled by a corresponding valve. Two valves FF used for controlling the vaporization process are exemplarily shown in FIG. 3, however, the remaining pipelines can also be provided with valves, which will not be repeated herein.

The closed working cycle for the working medium is employed in this example; however, in other examples and embodiment, an open working cycle for the working medium may also be adopted. Different functions may be achieved depending on various types of working medium, such as providing hot water to the surroundings, or realizing desalination.

Further preferably, a thermoelectric converter may also be provided in this example. The thermoelectric converter may be arranged on a thermal energy path between the solar energy utilizing device and the thermal energy utilizing device, and configured to generate electricity by using a temperature difference between the solar energy utilizing device and the thermal energy utilizing device for better utilizing solar energy. Specifically, a first thermoelectric converter 357 is wrapped around a heat exchange tube 3511 and arranged on the thermal energy path between the thermal energy storing device 314 and the first container 351; and a second thermoelectric converter 358 is arranged between the photovoltaic panel 313 and the second container 352.

In this example, power generating systems with a plurality of functions (including direct photoelectric conversion, direct thermoelectric conversion, and turbo-generator for generation) are integrated in a simple and economical manner; thus it is very suitable for building a large-sized solar power plant.

### Second Embodiment

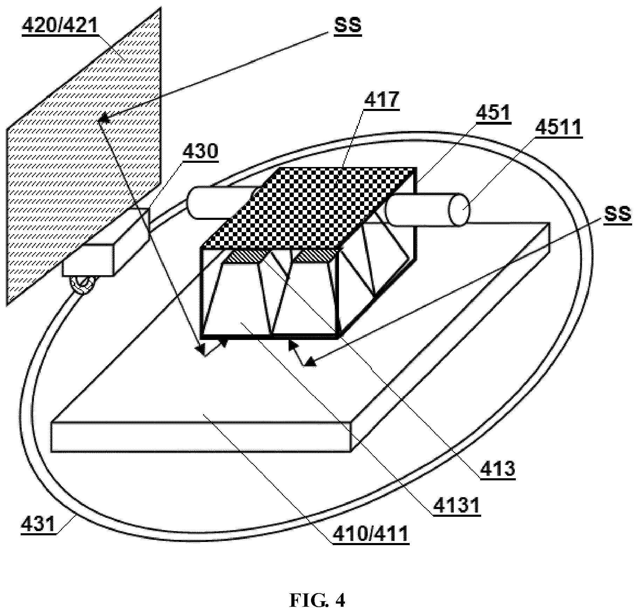

Referring to FIG. 4, a solar power station according to yet still an embodiment of the present disclosure includes a first light-receiving element 410, a second light-receiving element 420 and a first driving mechanism 430.

The first light-receiving element 410 is a combination of a solar energy utilizing device and a reflective optical element. The first working surface 411 that is substantially lying flat is formed by a reflective optical element, such as a mirror surface or a reflective Fresnel lens face. A set of tapered light-guiding elements 4131 is arranged above the first working surface. Each tapered light-guiding element includes a mirror surface as its inner wall and an end having a larger opening facing the first working surface. The photovoltaic panels 413 which may be flat or tapered (not shown) are respectively arranged at the bottom of respective tapered light-guiding elements (i.e. the end having a smaller opening), and the tapered top end thereof faces the end of the tapered light-guiding elements 4131 having a larger opening. For the sake of brevity, the structure formed by a plurality of tapered light-guiding elements integrated with the photovoltaic panels is hereinafter referred to as a "tapered solar energy utilizing apparatus".

The second light-receiving element 420 may be a reflector or a reflective Fresnel lens and has a second working surface 421 that is substantially vertical. The sunlight from the sky or the second working surface may be reflected (or "reflected and converged") by the first working surface 411 to the end of the tapered light-guiding element having a larger opening, then converged by the tapered light-guiding element and arrived at the photovoltaic panel.

The first driving mechanism 430 may be a railcar configured to travel along a rail 431 surrounding the first light-receiving element for sun tracking. The second light-receiving element 420 may be vertically fixed to the railcar.

In this embodiment, the tapered solar energy utilizing apparatus is wrapped and immersed in a container 451 served as a thermal energy utilizing device. The working medium in the container 451 can be selected from any working medium having a high heat capacity. Through the heat exchange between the photovoltaic panel 413 and the working medium inside the container 451, the temperature of the photovoltaic panel can be reduced with further utilizing the thermal energy.

Similar to the third example, the container 451 can also be coupled to an external device (not shown) via a pipe 4511 to form an open or closed working cycle for the working medium. For example, the container can function as a water heater, so that the power station according to this embodiment is suitable for construction in a hotel, a hospital, a fitness room, a gymnasium, a laundry, and the like where a large amount of hot water is required.

Preferably, the first light-receiving element 410 may further include a second photovoltaic panel 417 arranged on the top of the container 451 (a side facing the sky) to make full use of the surface that may receive sunlight. In other examples and embodiments, the second light-receiving element 420 may also preferably employ a photovoltaic panel.

### Third Example

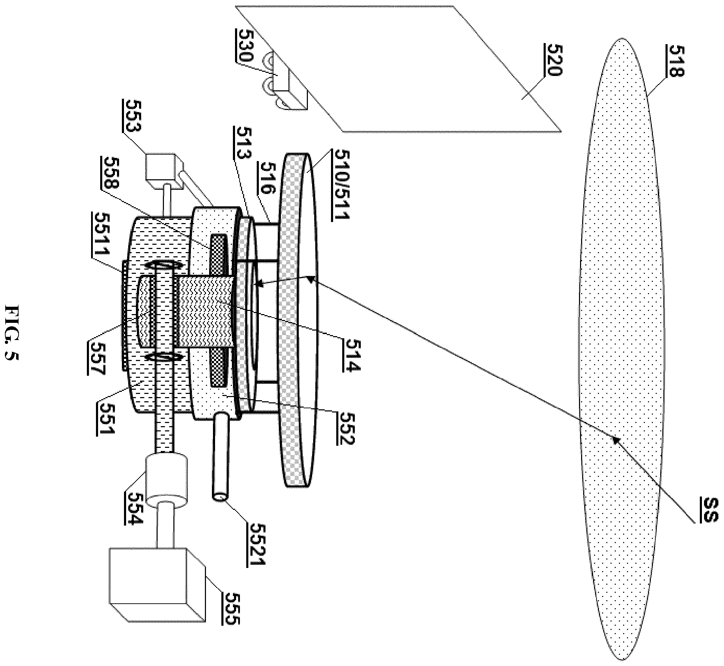

Referring to FIG. 5, a solar power station according to yet still another example of the present disclosure may include a first light-receiving element 510, a second light-receiving element 520 and a first driving mechanism 530.

The first light-receiving element 510 is a combination of a solar energy utilizing device and a transmissive lens; wherein a first working surface 511 that is substantially lying flat is formed by the transmissive lens (which may preferably be a Fresnel lens) and fixed by a support 516; and two solar energy utilizing devices, i.e. a photovoltaic panel 513 and a thermal energy storing device 514 surrounding the inlet of the thermal energy storing device 514, are arranged below the first working surface.

The photovoltaic panel 513, the thermal energy storing device 514, the second light-receiving element 520 and the first driving mechanism 530 are similar to those in the third example and will not be described again. One of the differences between this example and the third example is that a gas lens 518 arranged at the top of the solar power station. The gas lens as mentioned herein refers to a gasbag having a light condensing or astigmatizing function. The surface of the gasbag may be a transparent smooth surface or at least partially a mirror surface or a Fresnel lens surface; or the inside of the gasbag may be filled with a gas having a refractive index greater than 1, so that an optical function can be realized by the gas lens. The gas lens can be suspended in the air by filling with a gas having a density lower that of air. A concentrated gas lens is used in the present example. The sunlight from the sky is converged by the gas lens and irradiated onto the first working surface (or the first and second working surfaces), and then the sunlight from the gas lens or the second working surface is converged by the lens forming the first working surface 511 and irradiated onto the photovoltaic panel 513 or into the thermal energy storing device 514.

A thermal energy utilizing device may also be provided in this example. Unlike the third example, the thermal energy utilizing device in this example together with an external node device is formed as an open working cycle for the working medium. The working cycle may include a first container 551 serving as a liquid vaporizing tank, a second container 552 serving as a preheating tank, a first compressor 553, a turbine generator 554 and a condensing tank 555. Each node device is similar to that in the third example (and which will not be repeated herein) except that the liquid obtained after cooled by the condensing tank can be discharged instead of being transported back into the second container; and accordingly, the working medium in the second container can be replenished from the outside through a pipe 5521 to form an open working cycle for working medium.

If the working medium in the first container 551 is seawater, fresh water can be obtained from the condensing tank, so that the power station according to the present example can be used for seawater desalination while generating electricity. In this case, a large amount of salt residue remaining after seawater desalination may be produced in the first container 551; and consequently, a movable door 5511 for cleaning the salt residue may be arranged at the bottom of the first container 551.

Similar to the third example, a first thermoelectric converter 557 and a second thermoelectric converter 558 may further be provided in this example, which will not be described herein again.

This example is also applicable to the construction of a large-sized solar power station capable of performing seawater desalination while generating electricity with high efficiency. Moreover, since the gas lens suspended in the air is employed, the concentrating ratio of the system can be effectively increased at a low cost.

### Fourth Example

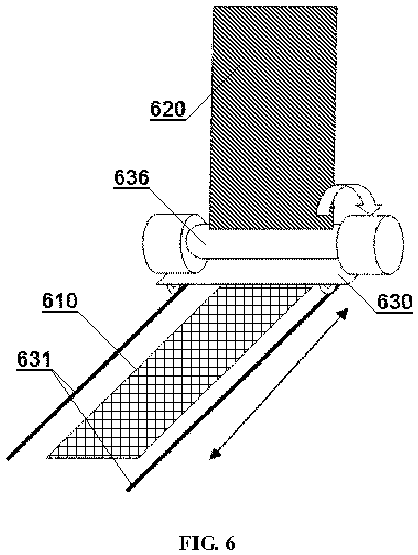

Referring to FIG. 6, a solar power station according to yet still another example of the present disclosure may include a first light-receiving element 610, a second light-receiving element 620 and a first driving mechanism 630.

The first light-receiving element 610 is a photovoltaic panel that is substantially lying flat and is roughly strip-shaped. The second light-receiving element 620 is a planar double-sided reflector that is arranged substantially vertically. The first driving mechanism 630 includes a railcar reciprocating on a linear rail 631 located on both sides of the first light-receiving element 610 in the extending direction thereof. The second light-receiving element is fixed to the railcar by a substantially horizontal rotating shaft 636.

In this example, the second light-receiving element has two degrees of freedom of movement, that is, a translational degree of freedom along the elongating direction of the photovoltaic panel, and a rotational degree of freedom with respect to the surface of the photovoltaic panel. The translational degree of freedom can be used to adjust the second light-receiving element to a position facing the sunlight, enabling reflection of sunlight onto the photovoltaic panel that is lying flat; while the rotational degree of freedom can be used to adjust the angle between the second light-receiving element and the sunlight, enabling the photovoltaic panel that is lying flat to receive the reflected solar energy to the fullest.

In other examples and embodiments, the second light-receiving element may be a concentrated reflective Fresnel lens, or preferable a concentrated reflective linear Fresnel lens. In these cases, the area of the second light-receiving element may be much larger than that of the photovoltaic panel that is lying flat, thereby achieving a high concentration ratio. In still other examples and embodiments, the second light-receiving element may also preferably adopt an astigmatic reflective linear Fresnel lens.

In this example, the vertical light-receiving element is moved along a simple linear trajectory, and the design for sun tracking is very simple, so that a large-sized solar power station with high output power can be constructed at a low cost, which is very suitable for use in a region in which the sun is tracked only in one direction, such as near the equator.

The principle and implementation manners present disclosure have been described above with reference to specific examples and embodiments, which are merely provided for the purpose of understanding the present disclosure and are not intended to limit the present disclosure. It will be possible for those skilled in the art to make variations based on the principle of the present disclosure.

## Claims

1. A solar power station, comprising:
a first light-receiving element (410) having a first working surface (411) that is substantially lying flat,
a second light-receiving element (420) having a second working surface (421) substantially perpendicular to the first working surface (411),
the first and the second working surfaces being configured so that sunlight irradiates onto the first working surface (411) after passing through or being reflected by the second working surface (421); and
a first driving mechanism (430) for driving the second working surface (421) to move or rotate relative to the first working surface (411) according to the movement of the sun, and the second light-receiving element (420) being fixed on the first driving mechanism (430);
wherein
the first and second light-receiving element are selected from a group consisting of: a solar energy utilizing device, a reflector, a transmissive lens, a reflective Fresnel lens and a combination of at least two thereof, **characterized in that**
the first light-receiving element (410) comprises at least one solar energy utilizing device (413) and a reflective optical element,
the first working surface (411) is formed by the reflective optical element, and
the light-receiving surface of the at least one solar energy utilizing device (413) faces the reflective optical element.

2. The solar power station of claim 1, wherein
the second light-receiving element (420) is in the shape of a plane, a curved surface, or a screen-type folding surface with adjacent folding sides capable of being moved relatively to one another.

3. The solar power station of claim 1, wherein
the first working surface (411) is a mirror surface, the area of the mirror surface being matched the area of the second working surface (421) opposite thereto.

4. The solar power station of claim 1, wherein
the first driving mechanism (430) comprises a railcar or a trackless wheeled machine which is moved around the first light-receiving element (410), or moved in a linear reciprocating manner along the extending direction of the first working surface; and
the second light-receiving element (420) is fixed to the railcar or the trackless wheeled machine either directly or through a rotating shaft.

5. A solar power station, comprising:
a first light-receiving element (310) having a first working surface (311) that is substantially lying flat,
a second light-receiving element (320) having a second working surface (321) substantially perpendicular to the first working surface (311),
the first and the second working surfaces being configured so that sunlight irradiates onto the first working surface (311) after passing through or being reflected by the second working surface (321); and
a first driving mechanism (330) for driving the second working surface (321) to move or rotate relative to the first working surface (311) according to the movement of the sun, and the second light-receiving element (320) being fixed on the first driving mechanism (330);
wherein
the first and second light-receiving element are selected from a group consisting of: a solar energy utilizing device, a reflector, a transmissive lens, a reflective Fresnel lens and a combination of at least two thereof, **characterized in that**
the first light-receiving element (310) comprises at least one solar energy utilizing device (313), a first reflective Fresnel lens (312) and a second reflective Fresnel lens (315),
the first working surface (311) is a mixed-type surface formed by the at least one solar energy utilizing device (313) and the first reflective Fresnel lens (312) which encircles the periphery of the solar energy utilizing device (313),
the second reflective Fresnel lens (315) is arranged face to face with the first reflective Fresnel lens (312), and
the sunlight from the sky or the second working surface (321) is reflected and converged to the second reflective Fresnel lens (315) by the first reflective Fresnel lens (312), and then reflected and converged to the at least one solar energy utilizing device (313) by the second reflective Fresnel lens (315).

6. The solar power station of any one of claims 1-5, further comprising
a thermal utilizing device (351,352,451,551,552) arranged on the back side of the solar energy utilizing device (313,513) or wrapping the solar energy utilizing device (314,413,514), and thermally coupled to the solar energy utilizing device (313,314,413,513,514), the thermal utilizing device (351,352,451,551,552) being selected from a group consisting of: a container for heating working medium, and a Stirling thermal generator.

7. The solar power station of claim 6, wherein
the container (351,352,451,551,552) for heating working medium is coupled to an external node device (353~356,553~555) in an open or close type through a pipe (3511,4511,5521) so as to form an open or close working cycle for working medium, and the node device is selected from a group consisting of: a turbine generator (354,554), a compressor (353,356,553), and a condensing tank (355,555).

8. The solar power station of claim 7, wherein
the working cycle for working medium is open type with the working medium therein being seawater, and the working cycle for working medium is further configured for seawater desalination.

9. The solar power station of any one of claims 6-8, further comprising
a thermoelectric converter (357,358,557,558) arranged on a thermal energy path between the solar energy utilizing device (313,314,513,514) and the thermal utilizing device (352,351,552,551) and configured for generating electricity by using a temperature difference between the solar energy utilizing device (313,314,513,514) and the thermal energy utilizing device (352,351,552,551).

10. The solar power station of any one of claims 1-9, further comprising
a gas lens (518) arranged at the top of the solar power station, the sunlight from the sky being irradiated onto the first working surface (511) via the gas lens (518) or onto the first and second working surfaces.

## Patentansprüche

1. Solarkraftwerk, umfassend:
ein erstes Lichtempfangselement (410) mit einer ersten Arbeitsfläche (411), die im Wesentlichen flach liegt,
ein zweites Lichtempfangselement (420) mit einer zweiten Arbeitsfläche (421), die im Wesentlichen senkrecht zur ersten Arbeitsfläche (411) steht,
wobei die erste und die zweite Arbeitsfläche so gestaltet sind, dass das Sonnenlicht auf die erste Arbeitsfläche (411) einstrahlt, nachdem es durch die zweite Arbeitsfläche (421) hindurchgetreten ist oder von dieser reflektiert wurde; und
einen ersten Antriebsmechanismus (430) zum Antreiben der zweiten Arbeitsfläche (421), damit sie sich relativ zur ersten Arbeitsfläche (411) entsprechend der Bewegung der Sonne bewegt oder dreht, und wobei das zweite Lichtempfangselement (420) an dem ersten Antriebsmechanismus (430) befestigt ist;
wobei
das erste und das zweite Lichtempfangselement aus einer Gruppe ausgewählt sind, bestehend aus: einer Solarenergie-Nutzungsvorrichtung, einem Reflektor, einer transmittierenden Linse, einer reflektierenden Fresnel-Linse und einer Kombination von mindestens zweien davon,
**dadurch gekennzeichnet, dass**
das erste Lichtempfangselement (410) mindestens eine Solarenergie-Nutzungsvorrichtung (413) und ein reflektierendes optisches Element umfasst,
die erste Arbeitsfläche (411) durch das reflektierende optische Element gebildet ist, und
die Lichtempfangsfläche der mindestens einen Solarenergie-Nutzungsvorrichtung (413) dem reflektierenden optischen Element zugewandt ist.

2. Solarkraftwerk nach Anspruch 1, wobei das zweite Lichtempfangselement (420) die Form einer Ebene, einer gekrümmten Fläche oder einer schirmartigen Faltfläche mit benachbarten Faltseiten, die relativ zueinander bewegt werden können, aufweist.

3. Solarkraftwerk nach Anspruch 1, wobei die erste Arbeitsfläche (411) eine Spiegelfläche ist, wobei die Fläche der Spiegelfläche an die Fläche der gegenüberliegenden zweiten Arbeitsfläche (421) angepasst ist.

4. Solarkraftwerk nach Anspruch 1, wobei
der erste Antriebsmechanismus (430) einen Schienenwagen oder eine kettenlose, mit Rädern versehene Maschine umfasst, der/die um das erste Lichtempfangselement (410) herum oder in einer linearen Hin- und Herbewegung entlang der Erstreckungsrichtung der ersten Arbeitsfläche bewegt wird; und
das zweite Lichtempfangselement (420) entweder direkt oder über eine drehbare Welle an dem Schienenwagen oder der kettenlosen, mit Rädern versehenen Maschine befestigt ist.

5. Solarkraftwerk, umfassend:
ein erstes Lichtempfangselement (310) mit einer ersten Arbeitsfläche (311), die im Wesentlichen flach liegt,
ein zweites Lichtempfangselement (320) mit einer zweiten Arbeitsfläche (321), die im Wesentlichen senkrecht zu der ersten Arbeitsfläche (311) steht,
wobei die erste und die zweite Arbeitsfläche so gestaltet sind, dass das Sonnenlicht auf die erste Arbeitsfläche (311) einstrahlt, nachdem es durch die zweite Arbeitsfläche (321) hindurchgetreten ist oder von dieser reflektiert wurde; und
einen ersten Antriebsmechanismus (330) zum Antreiben der zweiten Arbeitsfläche (321), damit sie sich relativ zur ersten Arbeitsfläche (311) entsprechend der Bewegung der Sonne bewegt oder dreht, und wobei das zweite Lichtempfangselement (320) an dem ersten Antriebsmechanismus (330) befestigt ist;
wobei
das erste und das zweite Lichtempfangselement aus einer Gruppe ausgewählt sind, bestehend aus: einer Solarenergie-Nutzungsvorrichtung, einem Reflektor, einer transmittierenden Linse, einer reflektierenden Fresnel-Linse und einer Kombination von mindestens zweien davon,
**dadurch gekennzeichnet, dass**
das erste Lichtempfangselement (310) mindestens eine Solarenergie-Nutzungsvorrichtung (313), eine erste reflektierende Fresnel-Linse (312) und eine zweite reflektierende Fresnel-Linse (315) umfasst,
die erste Arbeitsfläche (311) eine gemischte Oberfläche ist, die durch die mindestens eine Solarenergie-Nutzungsvorrichtung (313) und die erste reflektierende Fresnel-Linse (312) gebildet ist, die den Umfang der Solarenergie-Nutzungsvorrichtung (313) umgibt,
die zweite reflektierende Fresnel-Linse (315) gegenüber der ersten reflektierenden Fresnel-Linse (312) angeordnet ist, und
das Sonnenlicht vom Himmel oder der zweiten Arbeitsfläche (321) durch die erste reflektierende Fresnel-Linse (312) reflektiert und zur zweiten reflektierenden Fresnel-Linse (315) konvergiert wird und dann durch die zweite reflektierende Fresnel-Linse (315) zur mindestens einen Solarenergie-Nutzungsvorrichtung (313) reflektiert und konvergiert wird.

6. Solarkraftwerk nach einem der Ansprüche 1-5, ferner umfassend eine Wärme-Nutzungsvorrichtung (351, 352, 451, 551, 552), die auf der Rückseite der Solarenergie-Nutzungsvorrichtung (313, 513) angeordnet ist oder die Solarenergie-Nutzungsvorrichtung (314, 413, 514) umhüllt und thermisch mit der Solarenergie-Nutzungsvorrichtung (313, 314, 413, 513, 514) gekoppelt ist, wobei die Wärme-Nutzungsvorrichtung (351, 352, 451, 551, 552) ausgewählt ist aus einer Gruppe bestehend aus: einem Behälter zum Erhitzen eines Arbeitsmediums und einem Stirling-Thermogenerator.

7. Solarkraftwerk nach Anspruch 6, wobei
der Behälter (351, 352, 451, 551, 552) zum Erwärmen des Arbeitsmediums mit einer externen Knotenvorrichtung (353-356, 553-555) in einem offenen oder geschlossenen Typ durch ein Rohr (3511, 4511, 5521) gekoppelt ist,
um einen offenen oder geschlossenen Arbeitskreislauf für Arbeitsmedium zu bilden, und die Knotenvorrichtung aus einer Gruppe ausgewählt ist, bestehend aus: einem Turbinengenerator (354, 554), einem Kompressor (353, 356, 553) und einem Kondensationstank (355, 555).

8. Solarkraftwerk nach Anspruch 7, wobei
der Arbeitskreislauf für Arbeitsmedium vom offenen Typ ist, wobei das Arbeitsmedium darin Meerwasser ist, und der Arbeitskreislauf für das Arbeitsmedium außerdem für die Meerwasserentsalzung konfiguriert ist.

9. Solarkraftwerk nach einem der Ansprüche 6-8, ferner umfassend einen thermoelektrischen Wandler (357, 358, 557, 558), der auf einem thermischen Energiepfad zwischen der Solarenergie-Nutzungsvorrichtung (313, 314, 513, 514) und der Wärme-Nutzungsvorrichtung (352, 351, 552, 551) angeordnet ist und zum Erzeugen von Elektrizität unter Verwendung einer Temperaturdifferenz zwischen der Solarenergie nutzenden Vorrichtung (313, 314, 513, 514) und der Wärmeenergie-Nutzungsvorrichtung (352, 351, 552, 551) konfiguriert ist.

10. Solarkraftwerk nach einem der Ansprüche 1-9, ferner umfassend eine Gaslinse (518), die an der Oberseite des Solarkraftwerks angeordnet ist, wobei das Sonnenlicht vom Himmel über die Gaslinse (518) auf die erste Arbeitsfläche (511) oder auf die erste und zweite Arbeitsfläche gestrahlt wird.

## Revendications

1. Centrale solaire, comprenant :
un premier élément récepteur de lumière (410) ayant une première surface de travail (411) qui est sensiblement à plat,
un second élément récepteur de lumière (420) ayant une seconde surface de travail (421) sensiblement perpendiculaire à la première surface de travail (411),
les première et seconde surfaces de travail étant configurées de telle sorte que la lumière du soleil rayonne sur la première surface de travail (411) après avoir traversé ou avoir été réfléchie par la seconde surface de travail (421) ; et
un premier mécanisme d'entraînement (430) pour entraîner la seconde surface de travail (421) à se déplacer ou à tourner par rapport à la première surface de travail (411) en fonction du mouvement du soleil, et le second élément récepteur de lumière (420) étant fixé sur le premier mécanisme d'entraînement (430) ;
dans laquelle
le premier et le second élément récepteur de lumière sont choisis dans un groupe constitué par : un dispositif d'utilisation d'énergie solaire, un réflecteur, une lentille de transmission, une lentille de Fresnel réfléchissante et une combinaison d'au moins deux de ces éléments,
**caractérisée en ce que**
le premier élément récepteur de lumière (410) comprend au moins un dispositif d'utilisation d'énergie solaire (413) et un élément optique réfléchissant,
la première surface de travail (411) est formée par l'élément optique réfléchissant, et
la surface réceptrice de lumière dudit au moins un dispositif d'utilisation d'énergie solaire (413) fait face à l'élément optique réfléchissant.

2. Centrale solaire selon la revendication 1, dans laquelle
le second élément récepteur de lumière (420) a la forme d'un plan, d'une surface incurvée ou d'une surface pliable de type écran avec des côtés de pliage adjacents pouvant être déplacés l'un par rapport à l'autre.

3. Centrale solaire selon la revendication 1, dans laquelle
la première surface de travail (411) est une surface de miroir, l'aire de la surface de miroir étant adaptée à l'aire de la seconde surface de travail (421) qui lui est opposée.

4. Centrale solaire selon la revendication 1, dans laquelle
le premier mécanisme d'entraînement (430) comprend un véhicule ferroviaire ou une machine à roues sans rails qui est déplacé(e) autour du premier élément récepteur de lumière (410) ou déplacé(e) d'une manière linéaire en va-et-vient le long de la direction d'extension de la première surface de travail ; et
le second élément récepteur de lumière (420) est fixé au véhicule ferroviaire ou à la machine à roues sans rails soit directement, soit par l'intermédiaire d'un arbre rotatif.

5. Centrale solaire, comprenant :
un premier élément récepteur de lumière (310) ayant une première surface de travail (311) qui est sensiblement à plat,
un second élément récepteur de lumière (320) ayant une seconde surface de travail (321) sensiblement perpendiculaire à la première surface de travail (311),
les première et seconde surfaces de travail étant configurées de telle sorte que la lumière du soleil rayonne sur la première surface de travail (311) après avoir traversé ou avoir été réfléchie par la seconde surface de travail (321); et
un premier mécanisme d'entraînement (330) pour entraîner la seconde surface de travail (321) à se déplacer ou à tourner par rapport à la première surface de travail (311) en fonction du mouvement du soleil, et le second élément récepteur de lumière (320) étant fixé sur le premier mécanisme d'entraînement (330) ;
dans laquelle le premier et le second élément récepteur de lumière sont choisis dans un groupe constitué par : un dispositif d'utilisation d'énergie solaire, un réflecteur, une lentille de transmission, une lentille de Fresnel réfléchissante et une combinaison d'au moins deux de ces éléments,
**caractérisée en ce que**
le premier élément récepteur de lumière (310) comprend au moins un dispositif d'utilisation d'énergie solaire (313), une première lentille de Fresnel réfléchissante (312) et une seconde lentille de Fresnel réfléchissante (315),
la première surface de travail (311) est une surface de type mixte formée par ledit au moins un dispositif d'utilisation d'énergie solaire (313) et la première lentille de Fresnel réfléchissante (312) qui encercle la périphérie du dispositif d'utilisation d'énergie solaire (313),
la seconde lentille de Fresnel réfléchissante (315) est agencée face à face avec la première lentille de Fresnel réfléchissante (312), et
la lumière du soleil provenant du ciel ou de la seconde surface de travail (321) est réfléchie et convergée vers la seconde lentille de Fresnel réfléchissante (315) par la première lentille de Fresnel réfléchissante (312), puis réfléchie et convergée vers ledit au moins un dispositif d'utilisation d'énergie solaire (313) par la seconde lentille de Fresnel réfléchissante (315).

6. Centrale solaire selon l'une quelconque des revendications 1 à 5, comprenant en outre
un dispositif d'utilisation d'énergie thermique (351, 352, 451, 551, 552) agencé sur la face arrière du dispositif d'utilisation d'énergie solaire (313, 513) ou enveloppant le dispositif d'utilisation d'énergie solaire (314, 413, 514), et couplé thermiquement au dispositif d'utilisation d'énergie solaire (313, 314, 413, 513, 514), le dispositif d'utilisation d'énergie thermique (351, 352, 451, 551, 552) étant choisi dans un groupe constitué par : un récipient pour chauffer un milieu de travail et un générateur thermique Stirling.

7. Centrale solaire selon la revendication 6, dans laquelle
le récipient (351, 352, 451, 551, 552) pour chauffer un milieu de travail est couplé à un dispositif de noeud externe (353-356, 553-555) de type ouvert ou fermé par l'intermédiaire d'un tuyau (3511, 4511, 5521) de façon à former un cycle de travail ouvert ou fermé pour le milieu de travail, et le dispositif de noeud est sélectionné dans un groupe constitué par : un générateur à turbine (354, 554), un compresseur (353, 356, 553) et un réservoir de condensation (355, 555).

8. Centrale solaire selon la revendication 7, dans laquelle
le cycle de travail pour le milieu de travail est de type ouvert, le milieu de travail étant de l'eau de mer, et le cycle de travail pour le milieu de travail est en outre configuré pour le dessalement de l'eau de mer.

9. Centrale solaire selon l'une quelconque des revendications 6 à 8, comprenant en outre
un convertisseur thermoélectrique (357, 358, 557, 558) agencé sur un chemin d'énergie thermique entre le dispositif d'utilisation d'énergie solaire (313, 314, 513, 514) et le dispositif d'utilisation d'énergie thermique (352, 351, 552, 551), et configuré pour générer de l'électricité en utilisant une différence de température entre le dispositif d'utilisation d'énergie solaire (313, 314, 513, 514) et le dispositif d'utilisation d'énergie thermique (352, 351, 552, 551).

10. Centrale solaire selon l'une quelconque des revendications 1 à 9, comprenant en outre
une lentille à gaz (518) disposée au sommet de la centrale solaire, la lumière du soleil provenant du ciel étant rayonnée sur la première surface de travail (511) via la lentille à gaz (518) ou sur les première et seconde surfaces de travail.
